# EUROPEAN PATENT SPECIFICATION

(11) **EP 1 878 643 B1**
(45) Date of publication and mention of the grant of the patent: **27.06.2012**
(21) Application number: 07252811.0
(22) Date of filing: 13.07.2007
(51) Int. Cl.: B62D 25/14, B62D 27/06

(54) **Improvements in securing assemblies in vehicles**
Verbesserungen an Verbindungsanordnungen für Fahrzeuge
Améliorations dans les ensembles de fixation pour véhicules automobiles

(30) Priority: 13.07.2006 GB 0613940
(43) Date of publication of application: 16.01.2008
(73) Proprietor: Finnveden Bulten AB, 400 93 Göteborg (SE)
(72) Inventor: Carlsson, Rolf, 734 30 Hallstahammar (SE)
(74) Representative: Howick, Nicholas Keith

(56) References cited:
- EP-A- 0 176 663
- DE-C1- 4 228 625
- US-A1- 2002 154 966
- US-A1- 2006 138 806

## Description

The invention relates to securement assemblies, more particularly but not exclusively for securing structural members in vehicles and absorbing built in tolerances.

An example of a structural member which has to be secured in place during assembly of a vehicle is a tube which extends between legs of a vehicle A-frame in front of the doors, and which carries, at least partly, a dashboard assembly. The tube is commonly part of a dashboard assembly supplied to a vehicle manufacturer, and the complete dashboard assembly is awkward to manoeuvre with place in the A-frame. A spacing is necessary (typically about 7 mm each side) to enable the dashboard assembly to be manoeuvred into place.

For structural integrity and safety, the tube supporting the dashboard assembly needs to be bolted securely to the A-frame by a bolt at each end passing through a respective leg of the A-frame. The spacing referred to above cannot remain, however, as tightening of the securement bolts will pull in the A-frame, causing distortion and subsequent difficulty in fitting other parts to the car body. This can also have safety implications for the whole car structure.

Solutions have been proposed where a spacer element is threadedly engaged in each end of the tube before insertion of the dashboard assembly, and the securement bolts are each threadedly engaged in the spacer element.

The spacer element can be drawn out by causing the bolt thread to grip the spacer element threads such that turning of the bolts can be used to draw out the spacer elements until they engage the A-frame legs and eliminate the spaces originally present. However, this arrangement is unreliable, and so requires internal inspection (as it is part of the safety structure of the vehicle) and internal turning of the spacer element if it is found not to have been drawn out of the tube satisfactorily.

EP 0176663 discusses a device for the clamping connection of structure parts which are spaced part from each other by means of a spacer disk arranged within said space and resting by its outer broad side against one structural part and therefore shows the same principle of joining structural parts as claim 1. The structural difference of claim 1 is however that is shows a spacer made of metal, that the first element is secured to or part of a structural member in the form of a tube and that in the final, fully secured position the threads of the threaded shaft engage the threads in the previously unthreaded recess. For easier mounting the spacer disk, in order to obtain an axial displacement, derived from its rotation, to the free distance between the structural parts, is provided with helical pitched bearing surfaces opposite which there are form-litting helical mating, pitched bearing surfaces which are coordinated to the other structural part.

According to the invention, there is provided a securement assembly for securement to a support member which assembly comprises a first element, carrying a cylindrical thread of a first hand, a second spacer element carrying a thread of the first hand and threadedly engaged with the first element such that relative rotation moves the first and second elements axially relative to one another, and a third element engageable with the second element, one of the second and third elements having a cylindrical recess and the other of the second and third elements having a shaft, one of the recess and the shaft being unthreaded and the other of the recess and the shaft being threaded such that engagement of the shaft and recess causes a thread to form in the previously unthreaded shaft or recess, the thread of the shaft or recess being of hand opposite to the first hand, the arrangement for securement in use being such that first element and the support member are held in a fixed relationship, engagement of the third element through the support member and with the second element and relative rotation of the third element and second element in a thread forming direction causing rotation of the second element relative to the first element to draw the second element out of the first element until the second element abuts the support member, further relative rotation of the third element and second element in the same direction forming a thread in the previous unthreaded recess or shaft until a stop portion of the third element engages the support member to clamp the support member between the stop portion and the second element.

The recess is in the second element and the shaft is in the third element. The shaft is preferably threaded, and the recess plain.

The third element is preferably a thread forming bolt. The thread forming bolt is preferably right hand threaded, and the first and second elements are preferably left hand threaded.

The first element is secured to or part of a structural member, for example a tube.

The structural member may be part of an assembly, for example a dashboard for a vehicle.

The structural member may include a securement assembly at each end thereof.

The invention further provides a dashboard assembly for a vehicle comprising a securement assembly according to the invention at each end thereof.

The invention further provides a vehicle having a frame structure for supporting a dashboard comprising a structural member and a securement assembly according to the invention at each end thereof, the third element of each securement assembly passing through the frame and rotation of the third element of each securement assembly drawing out the respective second element into engagement with the frame, subsequent rotation of the third elements engaging and causing thread formation in the plain portion of second or third element until both ends of the dashboard structural member are secured to the frame structure with the dashboard extending across the vehicle.

By way of example, one embodiment of a securement assembly according to the invention will now be described with reference to the accompanying drawings, in which:-
Figure 1A is a schematic plan view of a vehicle;
Figure 1B is a schematic side view of a vehicle;
Figure 1C is a schematic, rear view in section of the vehicle of figures 1 and 2 illustrating where a dashboard is secured;
Figure 2A is a sectional side view of a securement assembly and part of a vehicle frame in a first, disengaged position;
Figure 2B is a sectional, side view of the securement assembly of figure 2A in a second, partly engaged position;
Figure 2C is a sectional side view of the securement assembly of figures 2A and 2B in a third, supporting position; and
Figure 2D is a sectional side view of the securement assembly of figures 2A, 2B, and 2C in a final, fully secured position.

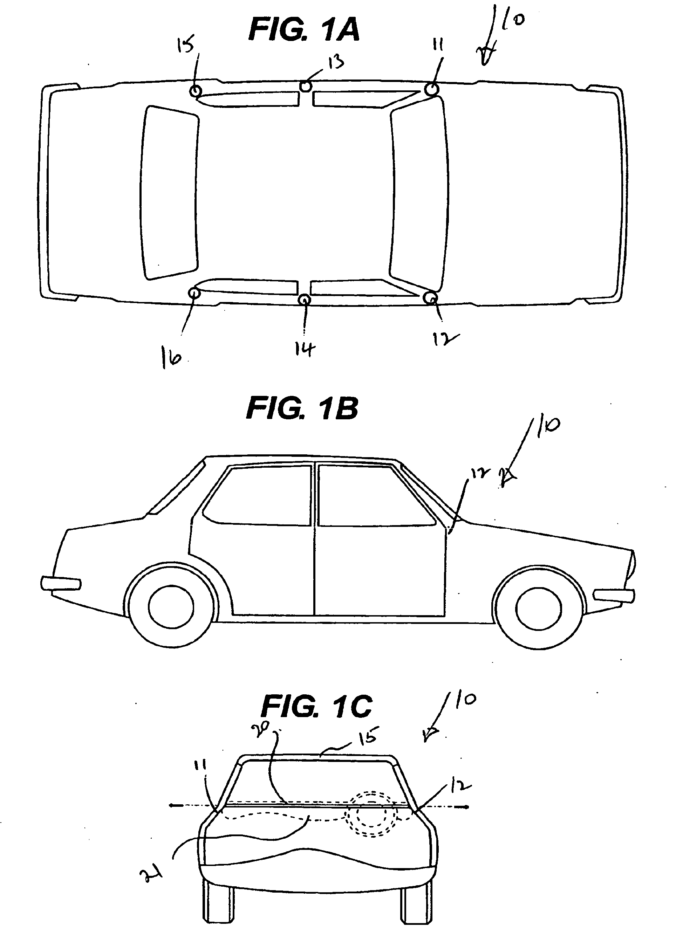

Figure 1 shows schematically a vehicle 10 having six structural frame pillars 11, 12,13,14,15,16.

The vehicle has a structural framework at the front of the passenger compartment called the A-frame 15, because of its shape.

The A-frame 15 supports a structural tube 20 extending between the A-frame pillars 11 and 12. Typically, the structural tube 20 carries a dashboard assembly 21. The dashboard assembly is bulky, and awkward to fit between the A-frame pillars 11 and 12, hence the need to have a space at each end of the tube 20 between the tube and the A-frame pillar to allow manoeuvring of the dashboard into place. That spacing is typically about 7 mm at each end.

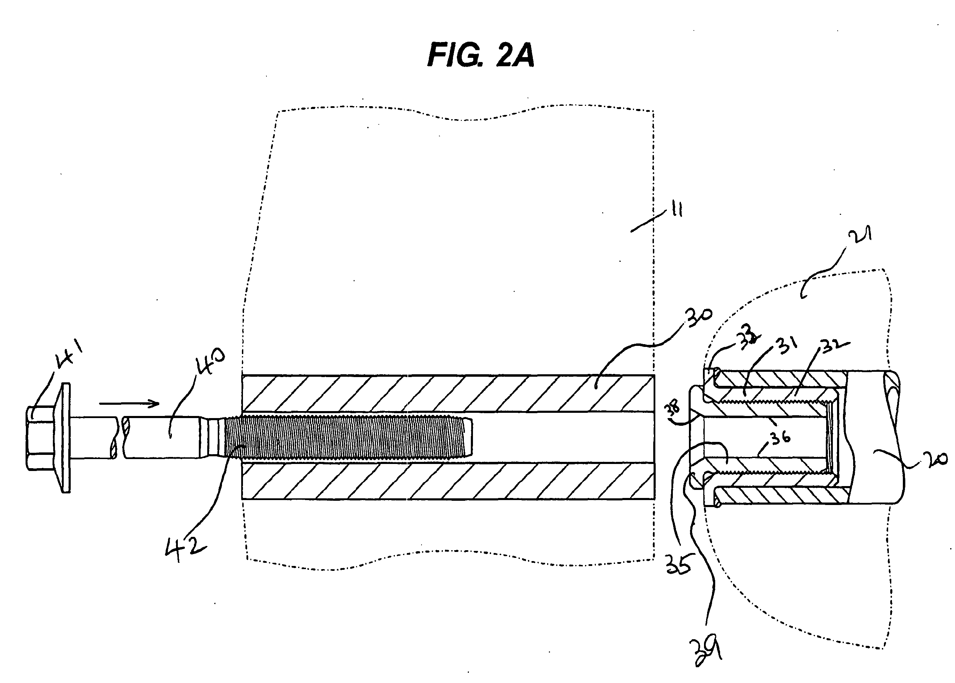

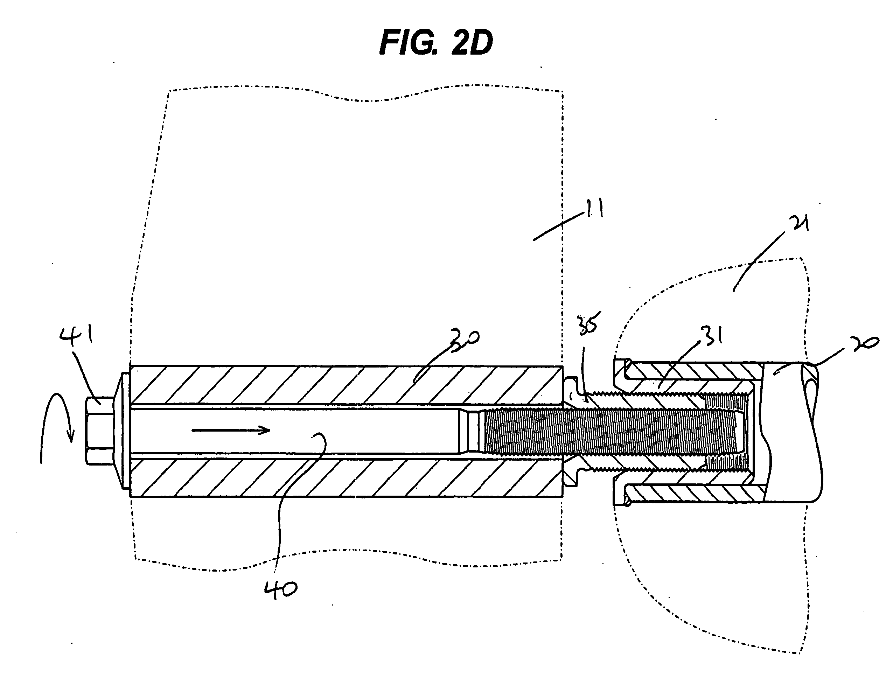

An embodiment of a securement assembly according to the invention, and stages of location and securement in a vehicle A-frame are shown in figures 2A-2D. It will be appreciated that the securement assembly according to the invention has applications in other parts of vehicles, and indeed in contexts different from vehicles; the invention addresses the problem of proper securement of an assembly to a member, where part of the assembly is located on one side of the member and has to be held spaced apart from the member initially, and the other part is inserted through the member and can be rotated easily from that side, the need being to fill the space on the one side of the member in order to clamp the assembly to the member without distortion of the member.

In figure 2A, part of the vehicle A-frame pillar 11 is shown, carrying a bolt tube 30, typically of steel. One end of the structural tube 20, typically of steel, is shown, as is part of the dashboard assembly 21 supported by the tube 20.

In the end of the tube 20 is secured, by welding or otherwise, a first element 31 in the form of an internally threaded metal cylinder 32 with an external annular flange 33. The internal threading in the cylinder is left handed. The element 31 is made of steel, but could be made of other suitable metal, metal alloy or other material. Furthermore, the external shape of the first element 31 need not be cylindrical. For example, if a square section tube 20 were used, the external sectional shape of the first element 31 would be square, but with a cylindrical threaded recess as described above. Also, the first element might not be separate but formed as part of the structural element, in this case the tube 20.

A second, spacer element 35 of metal, for example steel or alloy, is also cylindrical and carries an external left handed thread. The internal surface 36 of the cylindrical portion of the spacer element 35 is plain. Relative rotation of the first element 31 and the spacer element 35 will cause the spacer element 35 to move in or out of the first element 31. The spacer element 35 has a frusto-conical opening 38in a flanged end portion 39.

The dashboard assembly 21 including the tube 20 is shown in figure 2A in position with a necessary gap of 7mm between the end portion of the spacer element 31 and the bolt tube 30. Through the bolt tube 30 is inserted a third element in the form of a bolt 40 of hardened steel, and of a thread forming type. The bolt 40 has an external right hand thread 42. The bolt 40 has a conventionally shaped head 41.

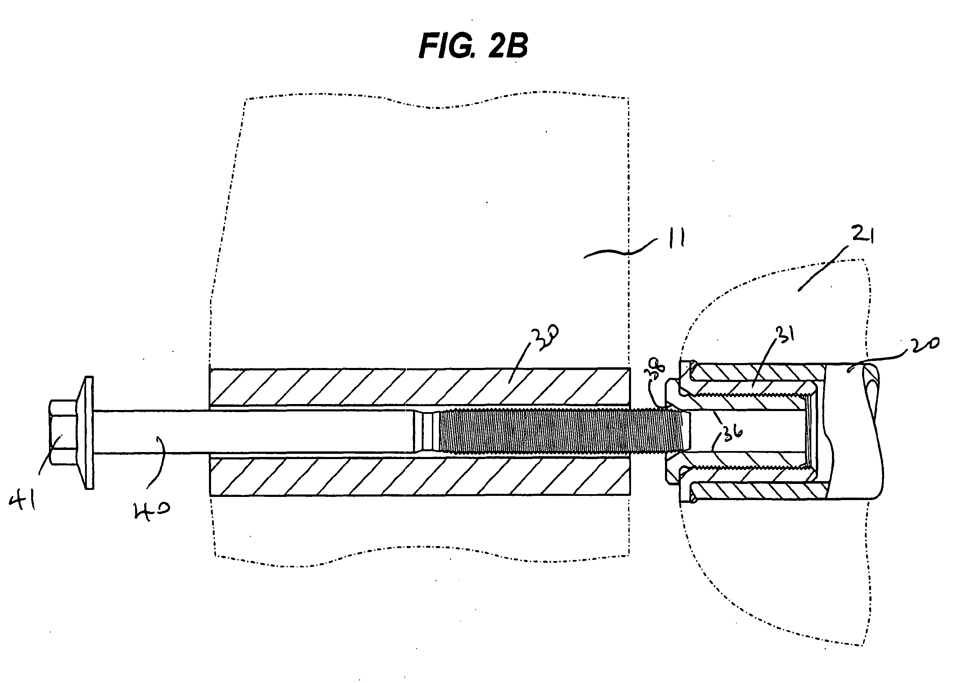

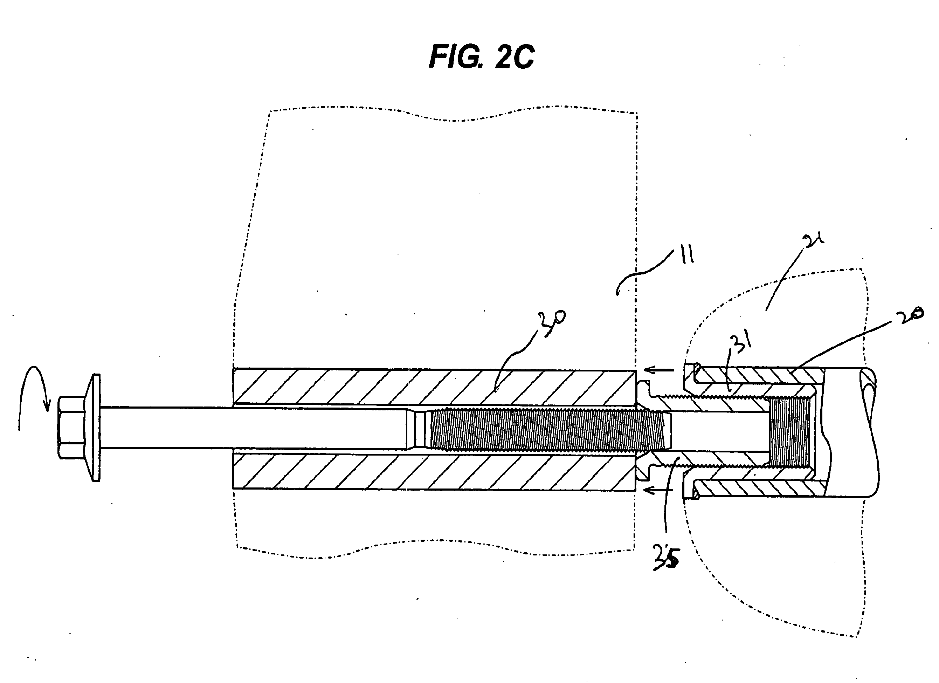

The next step is shown in figure 2B, where the bolt 40 is moved into engagement with the plain inner surface 36 of the spacer element 35. Entry is facilitated by the frusto-conical surface 38. As the hardened end threads of the bolt 40 engage the plain material of the spacer element 40, resistance to turning increases until there is less resistance given by rotation of the spacer element 35 relative to the first element 31 than there is to further entry of the bolt 40 into the spacer element 35. Thus, further rotation of the bolt 40 causes the spacer element to rotate out of the first element 31, due to the left hand threading, until the spacer element engages the material of the bolt tube 30, as shown in figure 2C.

At this stage, with the tube 20 held in position, further rotation of the bolt 40 will drive the bolt into the spacer element until the bolt head 41 engages the bolt tube 30 such that the bolt tube, and hence the A-frame is clamped securely between the bolt head 41 and the spacer element. In this way, tolerance has been absorbed (Figure 2B step) and clamping of the joint to a specific, desired level achieved simply by rotating the bolt 41 in a single rotational direction.

A similar arrangement will take place at the other end of the tube 20, so that the tube is secured in place at both ends.

For maintenance and repair, this arrangement gives the ability to remove the bolts, and hence the dashboard if necessary. When being disassembled, the bolt 40 is rotated in the opposite way to that used when tightening. First the clamping force exerted by the bolt 40 is reduced to zero, then the second, spacer element 35 will screw into the first element 31, until the flanged portion 39 prevents further movement, further rotating of the bolt 40 causing the bolt to disengage from the second spacer element 35 until completely free. Again, the disassembly operation is achieved by rotation of the bolt 40 in a single direction.

It will be appreciated that the securement assembly has applications other than the specific one described above, and beyond applications in relation to vehicles. In particular, the second and third elements of the embodiment described (with the second spacer element being formed with a recess and the third element being a thread forming bolt) may be replaced by the third element being formed with a cylindrical recess and the second element having a shaft engageable threadedly in the recess. Either the recess or the shaft could be threaded, with the other plain, such that relative rotation causes a thread to be formed in the previously plain surface. If the recess is formed in the third element, the third element will have a tube to provide the recess, and a stop portion for engagement, in use with the support member. The threaded engagement of the second element and first element is of opposite hand to the threaded engagement of the third element and the second element.

Furthermore, modifications and improvements may be made within the scope of the invention as defined in the appended claims.

## Claims

1. A securement assembly for securement to a support member which assembly comprises a first element (31) secured to or part of a structural member (20) in the form of a tube, the first element carrying a cylindrical thread of a first hand, a second spacer element (35) carrying a thread of the first hand and threadedly engaged with the first element (31) such that relative rotation moves the first (31) and second (35) elements axially relative to one another, and a third element (40) engageable with the second element, the second elements being of metal and having a cylindrical recess (36) and the third element having a shaft, the recess being unthreaded and the shaft being threaded such that engagement of the shaft and recess causes a thread to form in the previously unthreaded recess, the thread of the shaft being of hand opposite to the first hand, the arrangement for securement in use being such that first element and the support member are held in a fixed relationship, engagement of the third element through the support member and with the second element and relative rotation of the third element and second element in a thread forming direction causing rotation of the second element relative to the first element to draw the second element out of the first element until the second element abuts the support member, further relative rotation of the third element and second element in the same direction forming a thread in the previous unthreaded recess until a stop portion (41) of the third element engages the support member to clamp the support member between the stop portion and the second element, wherein in the final, fully secured position the threads of the threaded shaft engage the threads formed in the previously unthreaded recess.

2. A securement assembly as claimed in claim 1 wherein the third element is a thread forming bolt (40).

3. A securement assembly as claimed in claim 2 wherein the thread forming bolt is right hand threaded, and the first and second elements are left hand threaded.

4. A securement assembly as claimed in claim 1 wherein the structural member is part of an assembly.

5. A securement assembly as claimed in claim 4 wherein the structural member is part of a dashboard for a vehicle.

6. A securement assembly as claimed in any one of the preceding claims comprising a second securement assembly as claimed in any one of the preceding claims to provide a securement assembly of each end thereof.

7. A dashboard assembly for a vehicle comprising a securement assembly as claimed in any one of claims 1 to 6.

8. A vehicle (10) having a frame structure (15) for supporting a dashboard (21) comprising a structural member and a securement assembly as claimed in claims 1 at each end thereof, the third element of each securement assembly passing through the frame and rotation of the third element of each securement assembly drawing out the respective second element into engagement with the frame, subsequent rotation of the third elements engaging and causing thread formation in the plain portion of the second or third element until both ends of the dashboard structural member are secured to the frame structure with the dashboard extending across the vehicle.

## Patentansprüche

1. Befestigungsanordnung zur Befestigung an einem Stützglied, wobei die Anordnung Folgendes umfasst:
ein erstes Element (31), das an einem Strukturglied (20) in Form eines Rohrs befestigt ist oder einen Teil davon bildet, wobei das erste Element ein zylindrisches Gewinde mit einer ersten Gangrichtung aufweist, ein zweites Abstandselement (35), das ein Gewinde mit der ersten Gangrichtung aufweist und mit dem ersten Element (31) in Gewindeeingriff steht, so dass durch eine relative Drehung das erste (31) und das zweite (35) Element axial relativ zueinander bewegt werden, und ein drittes Element (40), das mit dem zweiten Element in Eingriff gebracht werden kann, wobei das zweite Element aus Metall besteht und eine zylindrische Aussparung (36) aufweist und das dritte Element einen Schaft aufweist, wobei die Aussparung kein Gewinde aufweist und der Schaft ein Gewinde aufweist, so dass durch Eingriff des Schafts und der Aussparung die Formung eines Gewindes in der zuvor kein Gewinde aufweisenden Aussparung verursacht wird, wobei das Gewinde des Schafts eine Gangrichtung aufweist, die der ersten Gangrichtung entgegengesetzt ist, wobei die Anordnung zur Befestigung im Gebrauch derart ist, dass das erste Element und das Stützglied in einer festgelegten Beziehung gehalten werden, wobei Eingriff des dritten Elements durch das Stützglied und mit dem zweiten Element und eine relative Drehung des dritten Elements und des zweiten Elements in einer Gewindeformungsrichtung eine Drehung des zweiten Elements relativ zum ersten Element verursacht, um das zweite Element aus dem ersten Element zu ziehen, bis das zweite Element an das Stützglied anstößt, wobei eine weitere relative Drehung des dritten Elements und des zweiten Elements in die gleiche Richtung ein Gewinde in der zuvor kein Gewinde aufweisenden Aussparung formt, bis ein Anschlagteil (41) des dritten Elements das Stützglied in Eingriff nimmt, um das Stützglied zwischen dem Anschlagteil und dem zweiten Element festzuklemmen, wobei in der vollständig befestigten Endposition das Gewinde des Gewindeschafts das in der zuvor kein Gewinde aufweisenden Aussparung geformte Gewinde in Eingriff nimmt.

2. Befestigungsanordnung nach Anspruch 1, wobei das dritte Element eine gewindeformende Schraube (40) ist.

3. Befestigungsanordnung nach Anspruch 2, wobei die gewindeformende Schraube ein rechtsgängiges Gewinde aufweist und das erste und das zweite Element ein linksgängiges Gewinde aufweisen.

4. Befestigungsanordnung nach Anspruch 1, wobei das Strukturglied ein Teil einer Anordnung ist.

5. Befestigungsanordnung nach Anspruch 4, wobei das Stützglied ein Teil eines Armaturenbretts für ein Fahrzeug ist.

6. Befestigungsanordnung nach einem der vorhergehenden Ansprüche, die eine zweite Befestigungsanordnung nach einem der vorhergehenden Ansprüche umfasst, um eine Befestigungsanordnung jedes Endes davon bereitzustellen.

7. Armaturenbrettanordnung für ein Fahrzeug, die eine Befestigungsanordnung nach einem der Ansprüche 1 bis 6 aufweist.

8. Fahrzeug (10) mit einer Rahmenstruktur (15) zum Stützen eines Armaturenbretts (21) mit einem Strukturglied und einer Befestigungsanordnung nach Anspruch 1 an jedem Ende davon, wobei sich das dritte Element jeder Befestigungsanordnung durch den Rahmen erstreckt und eine Drehung des dritten Elements jeder Befestigungsanordnung das jeweilige zweite Element in Eingriff mit dem Rahmen herauszieht, wobei eine anschließende Drehung des dritten Elements ein Ineingriffbringen des und Gewindeformen im planen Teil(s) des zweiten oder dritten Elements, bis beide Enden des Strukturglieds des Armaturenbretts an der Rahmenstruktur befestigt sind, verursacht, wobei sich das Armaturenbrett quer durch das Fahrzeug erstreckt.

## Revendications

1. Ensemble de fixation pour la fixation à un organe de support, lequel ensemble de fixation comprend un premier élément (31) fixé à ou faisant partie d'un organe structurel (20) en forme de tube, le premier élément portant un filetage cylindrique dans un premier sens, un deuxième élément d'espacement (35) portant un filetage dans le premier sens et engagé par vissage avec le premier élément (31) de telle sorte que la rotation de l'un par rapport à l'autre déplace le premier (31) et le deuxième (35) élément axialement l'un par rapport à l'autre, et un troisième élément (40) pouvant être engagé avec le deuxième élément, le deuxième élément étant en métal et ayant un retrait cylindrique (36) et le troisième élément ayant une tige, le retrait n'étant pas fileté et la tige étant filetée de telle sorte que l'engagement de la tige avec le retrait provoque la formation d'un filetage dans le retrait préalablement non fileté, le filetage de la tige étant dans un sens opposé au premier sens, l'agencement de fixation, pendant l'utilisation, étant tel que le premier élément et l'organe de support soient maintenus dans une relation fixée, l'engagement du troisième élément à travers l'organe de support et avec le deuxième élément et la rotation l'un par rapport à l'autre du troisième élément et du deuxième élément dans un sens de formation de filetage provoquant la rotation du deuxième élément par rapport au premier élément de manière à dévisser le deuxième élément hors du premier élément jusqu'à ce que le deuxième élément bute contre l'organe de support, la rotation supplémentaire l'un par rapport à l'autre du troisième élément et du deuxième élément dans le même sens formant un filetage dans le retrait préalablement non fileté jusqu'à ce qu'une portion de butée (41) du troisième élément s'engage avec l'organe de support pour serrer l'organe de support entre la portion de butée et le deuxième élément, et dans la position finale, complètement fixée, les filets de la tige filetée s'engageant avec les filets formés dans le retrait préalablement non fileté.

2. Ensemble de fixation selon la revendication 1, dans lequel le troisième élément est un boulon taraudeur (40).

3. Ensemble de fixation selon la revendication 2, dans lequel le boulon taraudeur présente un filetage à droite, et les premier et deuxième éléments présentent des filetages à gauche.

4. Ensemble de fixation selon la revendication 1, dans lequel l'organe structurel fait partie d'un ensemble.

5. Ensemble de fixation selon la revendication 4, dans lequel l'organe structurel fait partie d'un tableau de bord pour véhicule.

6. Ensemble de fixation selon l'une quelconque des revendications précédentes, comprenant un deuxième ensemble de fixation selon l'une quelconque des revendications précédentes pour fournir un ensemble de fixation de chacune de ses extrémités.

7. Ensemble de tableau de bord pour un véhicule, comprenant un ensemble de fixation selon l'une quelconque des revendications 1 à 6.

8. Véhicule (10) ayant une structure de cadre (15) pour supporter un tableau de bord (21), comprenant un organe structurel et un ensemble de fixation selon la revendication 1 à chacune de ses extrémités, le troisième élément de chaque ensemble de fixation passant à travers le cadre et la rotation du troisième élément de chaque ensemble de fixation dévissant le deuxième élément respective jusqu'à son engagement avec le cadre, la rotation subséquente du troisième élément provoquant l'engagement et la formation d'un filetage dans la portion lisse du deuxième ou troisième élément jusqu'à ce que les deux extrémités de l'organe structurel de tableau de bord soient fixées à la structure de cadre avec le tableau de bord s'étendant en travers du véhicule.
